# EUROPEAN PATENT APPLICATION

(11) **EP 0 633 686 A2**
(43) Date of publication of application: **11.01.1995**
(21) Application number: 94304944.5
(22) Date of filing: 05.07.1994
(51) Int. Cl.: H04N 1/00

(54) **Photographic apparatus**

(30) Priority: 05.07.1993 JP 191739/93; 30.09.1993 JP 268184/93; 01.10.1993 JP 270041/93
(71) Applicant: Konica Color Photo Equipments Co., Ltd., Shinjuku-ku, Tokyo (JP)
(72) Inventor: Kobayashi, Shunsuke, c/o Konica Color Photo, Shinjuku-ku, Tokyo (JP); Kawai, Takeshi, c/o Konica Color Photo, Shinjuku-ku, Tokyo (JP); Notake, Takumi, c/o Seki Electronics Co., Ltd., Hachiouji-shi, Tokyo (JP)
(74) Representative: Gordon, Michael Vincent

(57) **Abstract**

Photographic apparatus comprises:
an electronic camera (22) for photographing a shooting object,
an image storage unit (28) for storing a photographed image of a photographed shooting object,
a recording unit (29) for recording a photographed image of a shooting object stored in said image storage unit, and
a control unit (50) for controlling the operation of the photographic apparatus,
a monitor (23) preferably being supplied for displaying an image of a shooting object using a mirror (21) before photographing said reflected image with said electronic camera (22), and
said recording unit (29) preferably being provided with a plurality of printers (30) with said control unit (50) selecting an operable printer (30) to reduce waiting time.

## Description

This invention relates to improvements in photographic apparatus - conventional photographic apparatus has been used, for instance, for photographing a personal photo to be stuck on an identification card, a passport or a name card.

With such conventional photographic apparatus, a user sits on a chair provided at a specified location, and operates the apparatus according to an announced message or an instruction shown on an operation panel, thereby photographing an image of the user using a photographing camera on a photo-sensing material comprising a silver halogenide, and developing and printing using a developing solution and a printing solution.

A first problem related to conventional photographic apparatus is that, where the apparatus is a type using a photo-sensing material containing a silver halogenide and a developing solution, a considerable length of time is required for developing and drying a photo, that is, for instance, more than 2 minutes for finishing the photo. In addition, processing solutions such as a developing solution and printing solution deteriorate as the photo-sensing material of silver halogenide is processed and the solutions are oxidized by atmospheric air. Consequently, the quality of a finished photo may sometimes not be satisfactory. In addition, a considerable amount of cost is required for managing processing solutions such as supplying of a developing solution and a printing solution. Furthermore, since processing solutions contain toxic substances, recovery and disposal of wasted solutions is costly.

Hence, a novel photographic apparatus using a recording paper in substitute of a photo-sensing material of a silver halogenide is demanded, for recording a photographed image of a shooting object in order to create a certificate photo to be used in an identification card, a passport or a name card

A new recording system proposed for this purpose is that a photographed image of a shooting body, using an electronic camera, is recorded on a recording paper, for example. With such a system in use, time required for finishing a photo can be reduced more than that with a recording system using a photo-sensing material of a silver halogenide. In addition, the quality of a finished photo is guaranteed to be higher than a specified level, while also reducing maintenance cost.

A second problem would still exist even with such a new recording system; with a photographic apparatus used to take a picture for personal identification, such as an identification card, a passport and a name card, a user sits on a chair provided at a specified location, and operates the apparatus according to an announcement or a message displayed on an operation panel, and the electronic camera photographs the user. Consequently, a fairly long time is spent before photographing. Moreover, even if a printer is incorporated to record a photographed image of a shooting object, onto a recording paper, it would also take time for the printer to record the image of the shooting object on the recording paper.

In particular, when there are many users of the photographic apparatus, the users have to stand in a waiting queue, so each user must quickly sit on a chair and activate photographing. In addition, though time for recording a photographed image of a shooting object on a recording paper should be made as short as possible, there is a lower limit of time for a printer to record a photo.

A third problem, existing actually, is whether a photographed image of a shooting object can be recorded most appropriately on a recording paper, and that a range of photographing for a shooting object is correct. It is proposed that when an electronic camera is used, for example, a monitor can display an image of a shooting object before photographing, and the user can confirm satisfactory location of a photographing image and a finished state of a photo, beforehand.

By the way, with a photographic apparatus using an electronic camera for photographing a shooting object and recording a photo on a recording paper, the shooting object would be photographed indoors. Therefore, a problem associated with such an apparatus is that the quality of a photographed picture would be inferior to those shot in sunlight. Hence, there is an idea that a flash lamp is used for photographing even when an electronic camera is operated. At that time, a first iris value of a lens, when displaying an image of a shooting object onto the monitor, has to be changed to a second iris value upon flashing. Nevertheless, such instantaneous change from the first iris value of the lens to the second iris value upon flashing is difficult because of a large difference between the iris values, resulting in a problem that the quality of a photographed picture becomes lower than those of photographing in sunlight.

A fourth problem, where said electronic camera and monitor are provided, would be that the equipment becomes large because of a longer optical axis. In addition, the apparatus should also be composed in such a manner that a user can confirm a display of the monitor without moving his body while being seated on a chair. Otherwise, a photographed picture using the electronic camera becomes different from a state confirmed on the monitor, and checking with the monitor is wasted.

According to the present invention, however, photographic apparatus comprises:
an electronic camera for photographing a shooting object,
an image storage unit for storing a photographed image of a photographed shooting object,
a recording unit for recording a photographed image of a shooting object stored in said image storage unit, and
a control unit for controlling the operation of the photographic apparatus.

The photographed image may be recorded on recording paper as distinct from conventional photo-sensing material containing a silver halogenide.

Preferably, a photographing operation unit is provided for setting a recording condition of a photographed image and outputting a photographing instruction, and said control unit controls said electronic camera and said recording unit, according to said recording condition and said photographing instruction, as set in said photographing operation unit.

With this photographic apparatus, the time for finishing a personal photo used for an identification card, a passport or a name card can be reduced. In addition, a specified quality of a photographed picture can be guaranteed, while also reducing a maintenance cost. Furthermore, since the apparatus is free from the equipment in which a picture is photographed on a photo-sensing material containing a silver halogenide and then processed using a developing solution and a printing solution, a system of the apparatus can be made clean without polluting the environment.

Preferably, the photographic apparatus is provided with a photographing operation unit for setting a recording condition of a photographing image and outputting a photographing instruction, an electronic camera for photographing a shooting object, an image storage unit for storing a photographed image of a photographed shooting object, a recording unit provided with a plurality of printers for recording a photographed image of a shooting object, stored in the image storage unit, and a control unit for monitoring an operation state of the plurality of printers and selecting an operable printer and enabling a next photographing operation of the photographing operation unit.

With this photographing apparatus, a user operates the photographing operation unit and sets a recording condition for a photographing image, and after completion of setting this recording condition, the user issues a photographing instruction, thereby the electronic camera photographs a shooting object. A photographed image of the shooting object, shot by this electronic camera, is stored in the image memory unit, and a photographed image of the shooting object, stored in this image storage unit, is recorded on a recording paper using the printer. Recording of this photographed image is performed by the control unit that monitors operating states of a plurality of printers and selects and controls an operable printer. Even if a printer is in operation, the apparatus can select another printer without waiting, for recording. Therefore, it is possible to shorten the time for recording the photographed image of the shooting object, on the recording paper.

In addition, when the photographed image of the shooting body is recorded on the recording paper in the printer, the photographing operation unit is operable, so that a next user can activate photographing, thus an interval between photographing times can be reduced. Therefore, waiting time for users is reduced to a minimum, while recording photographed images of shooting objects onto recording papers, continually.

Preferably, the photographic apparatus has an electronic camera for photographing a shooting object, a monitor for displaying an image of a shooting object before photographing, a flash unit for flashing light upon photographing, a lens unit for controlling focusing of the electronic camera, an iris storage unit for storing a first iris value displayed on the monitor before photographing an image of the shooting object and a second iris value upon flashing light, an iris switch unit for changing the first iris value to the second iris value, an image storage unit for storing a photographed image of a shooting object, a recording unit for recording an image of a shooting object, photographed and stored in the image storage unit on a recording paper, and a control unit for controlling the iris switch unit to change the first iris value to the second iris value upon flashing light, and for controlling the electronic camera and the recording unit according to a recording condition and a photographing instruction, as set in the photographing operation unit, for a photographed image.

With this photographic apparatus, in order to display an image of a shooting object, to be photographed using the electronic camera, beforehand on the monitor, the lens unit of the electronic camera is controlled to a first iris value for displaying the image of the shooting object on the monitor, and the image of the shooting object is displayed on the monitor, with which the user checks a location of an image after photographing and finishing of a photo.

When a photographed image is recorded on the recording paper, the lens unit of the electronic camera is switched to a second iris value upon flashing light, and after that, the shooting object is photographed by flashing light in synchronism, and this photographed image is stored in the image storage unit. This photographed image stored in the image storage unit is recorded on the recording paper, thus the same picture quality as that of a daytime photographing can be obtained.

Preferably, the photographic apparatus is provided with a photographing operation unit for setting a recording condition of a photographing image and outputting a photographing instruction, a mirror for reflecting an image of a shooting object, an electronic camera for photographing a shooting object reflected by the mirror, a monitor for displaying an image of a shooting object, using the mirror, before photographing, an image storage unit for storing a photographed image of a shooting object, a recording unit for recording a photographed image of a shooting object, stored in the image storage unit, on a recording paper, and a control unit for controlling the electronic camera and the recording unit, according to a recording condition and a photographing instruction, as set in the photographing operation unit.

With this type of photographic apparatus, an image of a shooting object is reflected by the mirror, and the image reflected from the mirror is photographed by the electronic camera. Before actually photographing the image of the shooting object to be photographed, the image is displayed by reflecting from the mirror, in the monitor. Using the mirror in this manner, the length of an optical axis in the lighting system can be reduced to a minimum, thereby the apparatus is made more compact. Moreover, the user can check an image displayed on the monitor while he is sitting on the chair, without moving his body at all.

Photographic apparatus, according to the present invention, will now be described in greater detail, by way of example only, with reference to the accompanying drawings, in which:-
Fig. 1 is a side view of photographic apparatus according to the present invention;
Fig. 2 is a plan view of the photographic apparatus;
Fig. 3 is a front view of the photographic apparatus;
Fig. 4 is a plan view of the photographing operation unit in the photographic apparatus;
Fig. 5 is a block diagram of the control unit in the photographic apparatus;
Fig. 6 is an operation time chart of the control unit in the photographic apparatus;
Fig. 7 is an operation time chart of the printer in the photographic apparatus;
Fig. 8 is a flowchart of the entire operation of the photographic apparatus; and
Fig. 9 is an operation flowchart of the printer in the photographic apparatus.

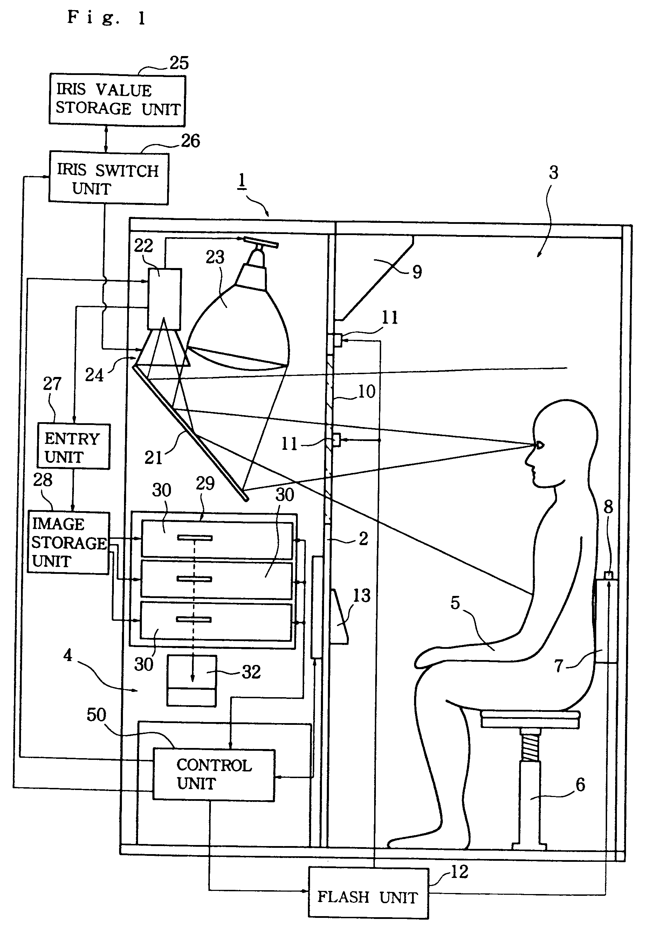

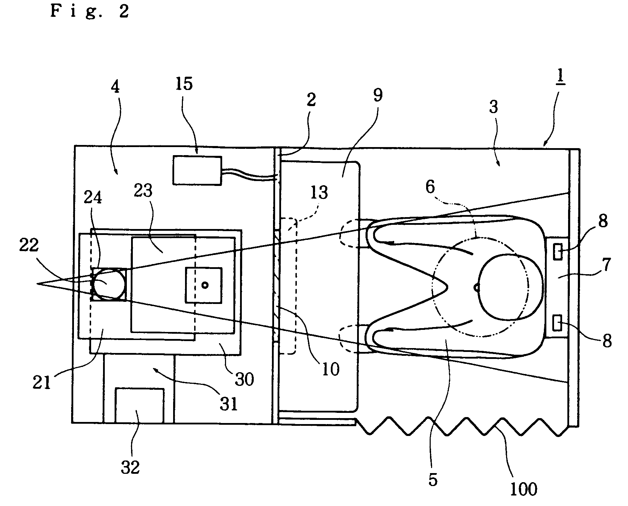

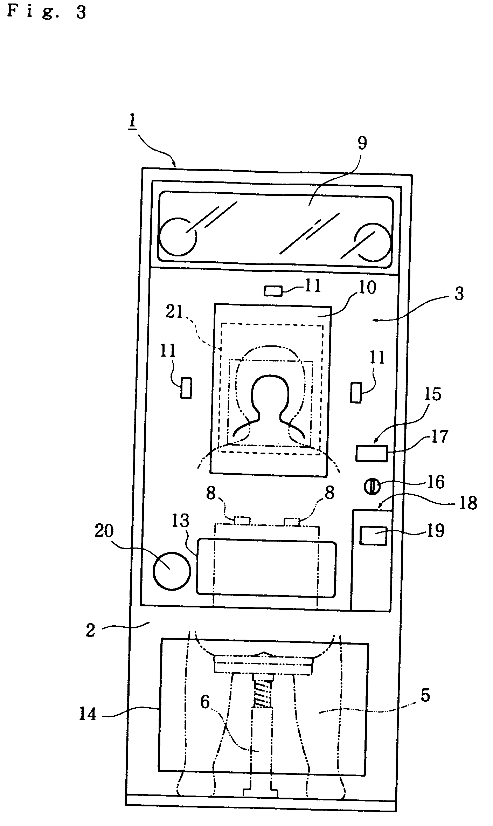

Referring initially to Figures 1 to 4, a main unit 1 of the photographic apparatus includes a front door 2 which partitions a photographing chamber 3 from a photographing unit 4.

The photographing chamber 3 is provided with, for instance, a light-shading curtain 100 through which a person 5 to be photographed can enter and leave the chamber 3. A chair 6 and a back 7 are also provided in the chamber 3. The chair 6 is movable up and down so that a user can freely adjust its height. In the back 7, two back flashes 8 are allocated, which flash light to prevent shadows of the person 5.

A room light 9 is provided in an upper part of the front door 2, and at the centre of the front door 2, a front glass 10 is provided. At three locations of upper, left and right parts of the front glass 10, a front flash 11 is provided. The front flashes 11 and back flashes 8 are driven by a flash unit 12 which is controlled by a control unit 50.

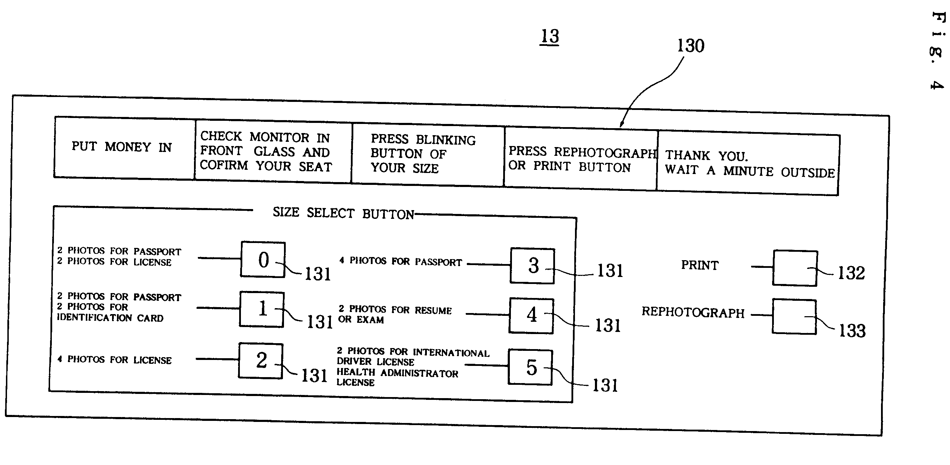

At a lower part of the front glass 10 in the front door 2, a photographing operation unit 13 is installed. By operating the photographing operation unit 13, a recording condition of a photographing image is set while also issuing a photographing instruction. The photographing operation unit 13, as shown in Fig. 4, provides an operation guide indicator 130 in which messages sequentially light up according to operation procedures, buttons 131 for selecting each photo size, a printer start button 132 and a rephotographing start button 133. Each of the select buttons 131, printer start button 132 and rephotographing start button 133 is illuminated when pressed.

Below the photographing operation unit 13, a maintenance door panel 14 is provided and, when the photographing unit 4 is to be maintained, the panel 14 is opened and closed. On the right side of the photographing operation unit 13 in the front door 2 are a coin inlet slot 16 and a money amount indicator 17 of a coin inlet device 15, and a bill inlet slot 19 of a bill inlet device 18. A user pays a fee into the coin inlet device 15 and/or the bill inlet device 18, and change is given as appropriate. On the left side of the photographing operation unit 13 in the front door 2, a speaker 20 is installed and announces operation procedures interactively to each user.

Inside the photographing unit 4, a mirror 21 is located in opposition to the front glass 10, and above the mirror 21, an electronic camera 22 and a monitor 23 are provided. The electronic camera 22 is composed of, for example, a CCD camera. Using the electronic camera 22, an image of a shooting object, reflected from the mirror 21, is photographed. The monitor 23 is incorporated with, for example, a colour CRT, and the monitor 23 displays an image of a shooting object by reflecting the image from the mirror 21, before actually photographing with the electronic camera 22.

In such a manner as described above, an image of a shooting object is photographed using the electronic camera 22 through the mirror 21, and the image is displayed on the monitor 23. Thus, the length of an optical axis of the lighting system can be reduced, which gives room for installing the electronic camera 22 and the monitor 23 more easily. As a result, the photographing unit 4 is made more compact. Furthermore, since the monitor 23 displays an image after reflecting from the mirror 21, a user can check the image while sitting on the chair 6, without moving his body.

The electronic camera 22 is provided with a lens unit 24, an iris of which is controllable. A diaphragm of the lens unit 24 is opened and closed for controlling the iris. An iris value storage unit 25 stores a first iris value, for displaying an image of a shooting object beforehand on the monitor 23, and a second iris value upon flashing light. An iris switch unit 26 changes over the first and second iris values, for monitoring and flashing, stored in the iris value storage unit 25.

More explicitly, the control unit 50 initially instructs the iris switch unit 26 to set the first iris value, to control the lens unit 24 of the electronic camera 22, thereby displaying the image of the shooting object to be photographed, beforehand on the monitor 23. Thus, the user can check exactly what image is to be photographed and is to appear in the finished photo.

After that, the control unit 50 instructs the iris switch unit 26 to change the lens unit 24 of the electronic camera 22 to the second iris value for flashing light. Then, the control unit 50 drives the flash unit 12 in synchronism with the photographing operation so that the front flashes 11 and back flashes 8 are illuminated whilst the shooting object is photographed. A photographed image is stored in an image storage unit 28 through an entry unit 27. The photographed image stored in the image storage unit 28 is recorded on recording paper in a recording unit 29. Thus, the same picture quality as daytime photography can be obtained.

As described, a user can display an image of a shooting object previously on the monitor 23 and check the location of the image to be photographed. In addition, the same picture quality as daytime photography is available by using the electronic camera 22 for photographing.

In fact, with this embodiment of the photographic apparatus, conditions of photographing were first adjusted using a compensation filter of the electronic camera 22 while using only strobe light from a front flash 11 and back flash 8. As a result, colour balance in a colour print was improved. However, chroma and contrast of the colour were so low that they could not be compensated for only by adjusting the compensation filter in the light source.

Actually, picture quality was improved by adjusting the colour printer 30. But, once the colour printer 30 was adjusted, picture quality of the monitor 23 also altered, resulting in disagreement with a printed result in the colour printer 30.

Thus, a satisfactory picture quality of the print was obtained by adjusting the photographing light source of the electronic camera 22 and the colour printer 30. That is, only strobe light from the front flashes 11 and back flashes 8 was used as a photographing light source of the electronic carnera 22, without allocating a compensation filter in front of the electronic camera 22. In addition, a picture quality of a print could be improved in terms of saturation, lightness and gradation by adjusting the generation of colours from the colour printer 30. Using the photographic apparatus of the present invention, light leaking from a gap in a lower part of the light-shading curtain 100 does not substantially adversely affect photographing.

The recording unit 29 is disposed below the mirror 21, and the unit 29 is composed of three stages of the printer 30 which as indicated is a colour printer.

Operation states of the plurality of printers 30 are monitored by the control unit 50 which selects an operable printer 30 and controls the printer along with operating the photographing operation unit 13. An example of the printer 30 in use is a sublimation type, thermal transplanting model, and an example of recording paper in use is a sublimation type, thermal transplanting paper.

A recording paper with a photographed image recorded in the recording unit 29 is conveyed by means of a transportation mechanism 31 and is taken outside the main unit 1 from a photo outlet slot 32.

As described above, with the photographic apparatus according to the present invention, a photographed image of a shooting object, shot by the electronic camera 22, is recorded on a recording paper according to a recording condition and a photographing instruction set in the photographing operation unit 13, for photographing. Consequently, time for finishing a personal photo used in an identification card, passport, name card, etc. can be reduced. In addition, a required quality of a finished photo can be guaranteed, while also reducing maintenance cost.

Furthermore, a user can operate the photographing operation unit 13 to set a recording condition, and when setting of the recording condition is completed, the unit 13 issues a photographing instruction to photograph a shooting object using the electronic camera 22. A photographed image of the shooting object, taken by the electronic camera 22, is stored in the image storage unit 28 through the entry unit 27.

The photographed image of the shooting object, stored in the image storage unit 28, is recorded by the printer 30. Such recording of the photographed image is controlled by the control unit 50 that monitors operation states of the plurality of printers 30 and selects an operable printer 30. Even if a printer 30 is in operation, another printer 30 can be selected for recording without waiting, so it becomes possible to reduce the time for recording the photographed image of the shooting object on the recording paper to a minimum.

Moreover, when the photographed image of the shooting object is recorded on the recording paper by means of the printer 30, the user can operate the photographing operation unit 13. Therefore, the next user can activate the next photographing operation. Thus, time intervals between photographing operations can be effectively reduced so that users need not wait for a long time to record photographed images of shooting objects onto recording papers.

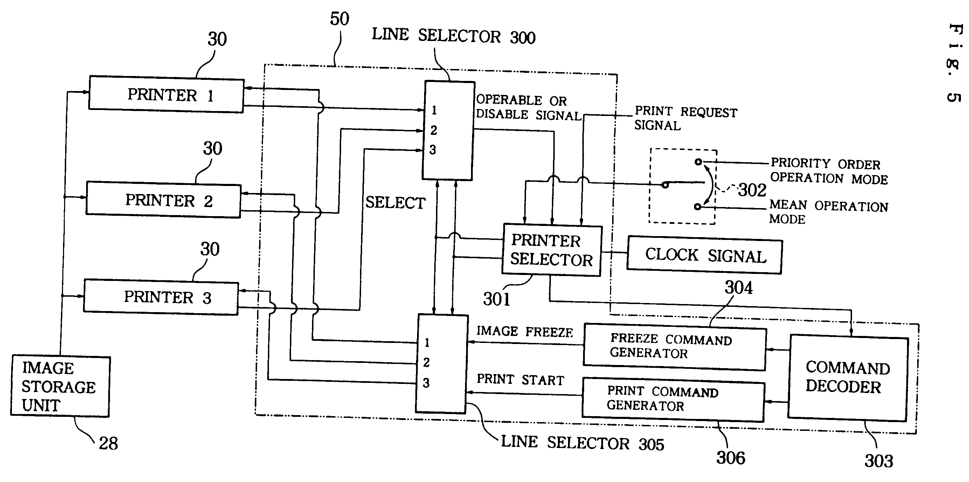

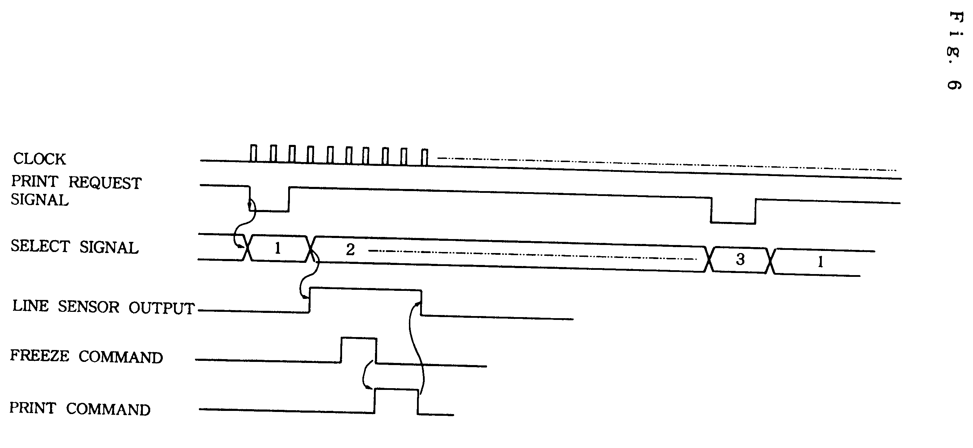

Now, the composition of the control unit 50 of the photographic apparatus will be explained in more detail with reference to Figures 5 to 7.

An image signal can be entered into each printer 30 to which a line selector 300 is connected. An operation state of each printer 30 is monitored in terms of printer status. The line selector 300 issues an operable or disabled signal to a printer selector 301 which also receives a clock signal for obtaining an operation timing and a print request signal for starting up recording. In addition, the printer selector 301 can change over a priority order operation mode and a mean operation mode by means of a select switch 302.

In the priority order operation mode, three printers 30 are beforehand given a priority order, and after selecting an operable printer 30 and upon completion of operating the printer, the printer 30 with next priority is activated for a next operation and performs recording. When recording paper of the printer 30 of the next priority is consumed, still another operable printer 30 is selected and operated. For subsequent operations, the printer 30 with the next priority is activated for operation and recording. As such, recording papers are consumed sequentially in the order of printer priorities. Therefore, maintenance personnel can supply recording papers to printers 30 with no paper, and can maintain such a state that at least one printer 30 has always recording paper. Consequently, the photographic apparatus according to the present invention can advantageously be applied to a site where maintenance of the apparatus can be frequently performed.

In the mean operation mode, three printers 30 are previously numbered for a priority order, and according to the priority order, an operable printer 30 is selected at a time. Every time the printer is operated, the number of the printer 30 is stored, and for the next operation, the printer with the next sequential number is activated for recording. Therefore, a plurality of printers 30 is operated evenly while also evenly consuming recording papers, so maintenance personnel has to supplement recording papers into all printers 30 at the same time. As a result, this type of the photographic apparatus according to the present invention is applicable advantageously to a site where the apparatus cannot be maintained so frequently.

The printer selector 301 sends a control signal to a command decoder 303 according to an operable or disabled signal, preset priority order operation mode or mean operation mode, and a print request signal. Through the command decoder 303, a freeze command generator 304 sends an image freeze signal to a line selector 305, and a print command generator 306 sends a print start signal to the line selector 305. The line selector 305 selects a printer 30 which is controlled to record a photographed image of a shooting object, photographed by the electronic camera 22, onto a recording paper.

In such a manner as described above, a plurality of shooting objects is photographed sequentially, and an interval between each photographing is expressed as (T/n) ≧ t where t is time for processing a photographed image, T is time for recording in the printer, and n is the number of printers 30.

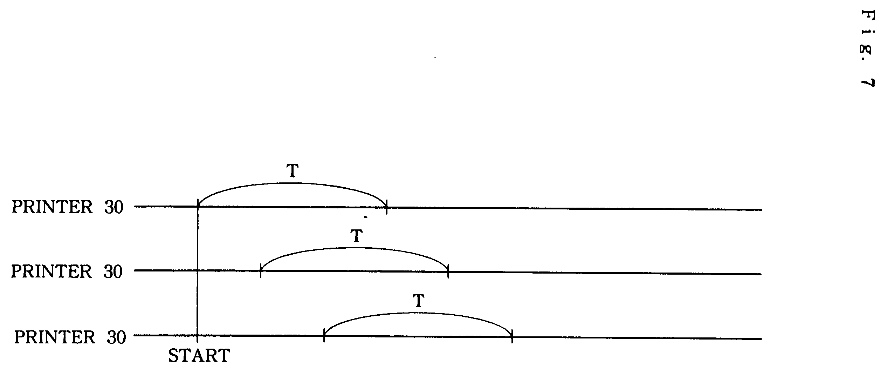

Now assume that, as shown in Fig. 7, three printers 30 are disposed, and processing time for a printer 30, including image recording time and photographed image processing time is 60 seconds or less. Then, after 20 seconds, a next user can take his personal photo and record an image of the shooting object using another printer 30. With this embodiment, three printers 30 are arranged. However, two printers or four or more printers may also be used according to particular requirement at a site, that is, how many printers are needed.

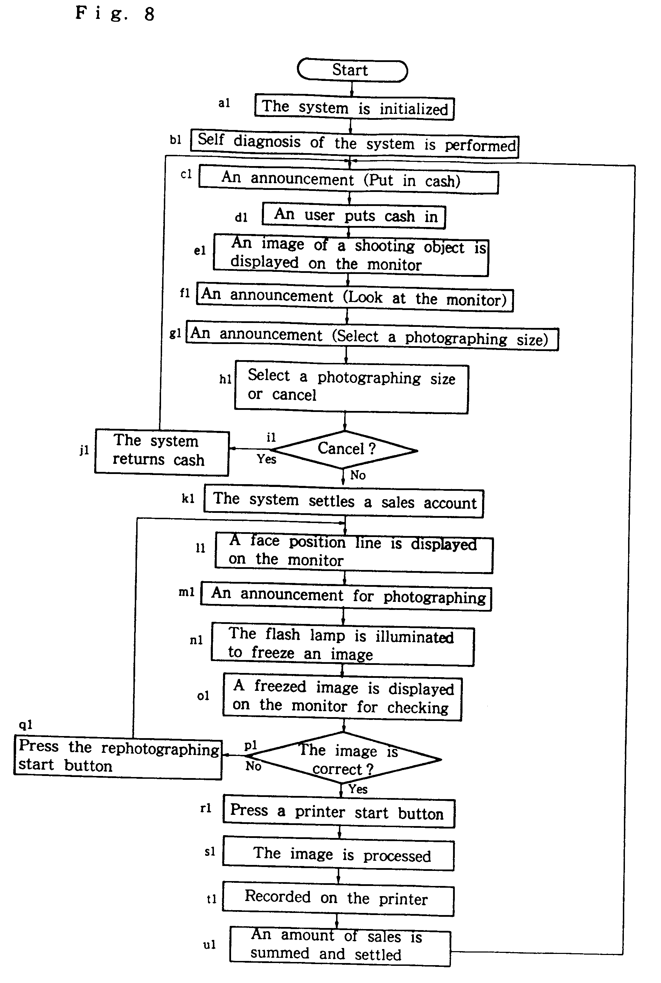

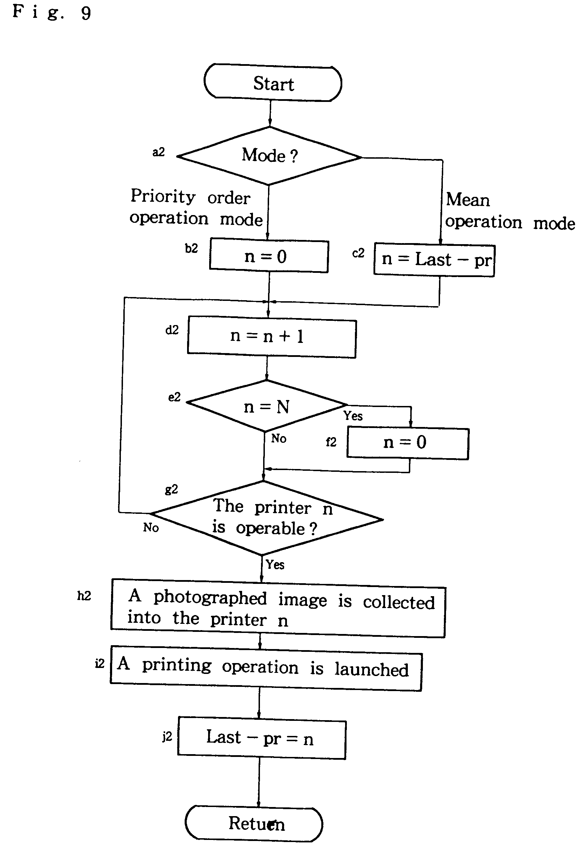

Finally, the operation of the photographic apparatus according to the present invention is explained referring to Figs. 8 and 9.

In Fig. 8, the system of the photographic apparatus is first initialized (step a1), and then self diagnosis of the system is performed (step b1) . In addition, an announcement and an indication are activated for requiring to put in cash (step c1), and when a user puts cash in (step d1), an image of a shooting object is displayed on the monitor 23 (step e1). In continuation, an announcement and an indication are activated to advise the user to look at the monitor 23 (step f1), while also issuing an announcement and an indication for requesting the user to select a photographing size (step g1) .

When the user completes a selection of a photographing size or cancels a once selected size (step h1), the system decides whether the selection is accepted or cancelled (step i1). When a selection is cancelled, the system returns cash entered before (step j1), and goes back (to step c1). It is also possible to allow cancelling of a selection only once.

Unless a selection is cancelled (in step i1), the system settles a sales account (step k1), and a face position line is displayed on the monitor 23 (step l1) while activating an announcement for photographing (step m1), and the flash lamp is illuminated to freeze an image (step n1). A freezed image is displayed on the monitor for checking by the user (step o1).

The system then judges whether the image is correct or not , (step p1), and when the image is not correct, the system advises the user to press the rephotographing button 133 (step q1), while going back (to step l1). If the image is correct, to the contrary, the user is advised to press a print button 132 (step r1). Thus, the image is processed (step s1) and recorded on the printer (step t1), thereby completing the recording of a photographed image onto the recording paper. Then, an amount of sales is summed and settled (step u1) before going back (to step c1).

Operation of the printer is explained referring to Fig. 9. The system first judges (step a2) whether a preset mode is the priority order operation mode or mean operation mode. With the priority order operation mode, n = 0 (step b2), and with the mean operation mode, n = Last - pr (step c2), where n is an index for scanning printers and Last - pr is the number of a printer operated last.

An increment of n = n + 1 is activated (step d2) and it is judged whether n = N (step e2) where N is the number of printers.

If n = N, n = 0 is activated (step f2) and it is judged (step g2) whether the printer n is operable or not. Unless n = N, the system goes straight to judge (step g2) whether the printer n is operable. If not operable, the system goes back (to step d2) where an increment of n = n + 1 is activated, and then performs operations in the same way.

When the printer n is operable, a photographed image is collected into the printer n (step h2), and a printing operation is launched (step i2), and when recording the image onto a recording paper is completed, Last-pr = n is activated (step j2) while returning the system to the initial state.

The photographic apparatus according to the present invention can record a photographed image of a shooting object, taken by an electronic camera, onto a recording paper, with which a user himself can take his own personal photo for an identification card, passport, name card, etc.

## Claims

1. Photographic apparatus comprising:
an electronic camera (22) for photographing a shooting object,
an image storage unit (28) for storing a photographed image of a photographed shooting object,
a recording unit (29) for recording a photographed image of a shooting object stored in said image storage unit, and
a control unit (50) for controlling the operation of the photographic apparatus.

2. Photographic apparatus according to claim 1, in which a photographing operation unit (13) is provided for setting a recording condition of a photographed image and outputting a photographing instruction, and said control unit (50) controls said electronic camera (22) and said recording unit (29), according to said recording condition and said photographing instruction, as set in said photographing operation unit (13).

3. Photographic apparatus according to claim 1 or claim 2, in which said recording unit (29) is provided with a plurality of printers (30) for recording a photographed image of a shooting object stored in said image storage unit (28), and said control unit (50) monitors an operation state of said plurality of printers and selects an operable printer (30) whilst enabling a next photographing operation.

4. Photographic apparatus according to any preceding claim, in which a mirror (21) is provided for reflecting an image of a shooting object, and said electronic camera (22) is for photographing a shooting object reflected by said mirror.

5. Photographic apparatus according to any preceding claim, in which a monitor (23) is provided for displaying an image of a shooting object before photographing.

6. Photographic apparatus according to claim 4 and claim 5, in which said monitor (23) is for displaying an image of a shooting object using said mirror (21) before photographing said reflected image with said electronic camera (22).

7. Photographic apparatus according to claim 5 or claim 6, in which:
a flash unit (12) is provided for flashing light upon photographing,
a lens unit (24) is provided for controlling focusing of said electronic camera,
an iris value storage unit (25) is provided for storing a first iris value for display on said monitor before photographing an image of said shooting object and a second iris value upon flashing light,
an iris switch unit (26) is provided for changing said first iris value to said second iris value, and
said control unit (50) controls said iris switch unit (26) to change the first iris value to the second iris value upon flashing light.

8. Photographic apparatus according to any preceding claim, in which said photograhed image is recorded on recording paper as distinct from conventional photo-sensing material containing a silver halogenide.
